# EUROPEAN PATENT SPECIFICATION

(11) **EP 3 983 330 B1**
(45) Date of publication and mention of the grant of the patent: **18.09.2024**
(21) Application number: 20730611.9
(22) Date of filing: 03.06.2020
(51) Int. Cl.: B67C 7/00

(54) **MACHINE WITH A BOTTLE ASSEMBLY**
ANLAGE MIT FÜLLVORRICHTUNG
MACHINE COMPRENANT UNE UNITÉ DE REMPLISSAGE

(30) Priority: 17.06.2019 IT 201900009117
(43) Date of publication of application: 20.04.2022
(73) Proprietor: Quinti S.r.l., 52047 Marciano Della Chiana (IT)
(72) Inventor: QUINTI, Alessio, 52045 FOIANO DELLA CHIANA (IT)
(74) Representative: Modiano, Micaela Nadia
(86) International application number: PCT/EP2020/065382
(87) International publication number: WO 2020/254111

(56) References cited:
- WO-A2-2015/071868
- CN-A- 107 021 444
- CN-A- 108 439 316
- DE-A1- 102008 032 822
- DE-A1- 4 135 438
- FR-A1- 2 589 139
- US-A- 4 004 620
- US-A1- 2003 037 514
- US-A1- 2017 341 919

## Description

The present invention relates to a machine, particularly of the type with increased productivity.

In the field of bottling machines and, in particular, as regards isobaric machines of the linear type, it is known to use means for the linear advancement and conveyance of the vessels to be filled such as to align said vessels in a single row along an advancement line with a preset pitch.

In greater detail, these are conveyor belts on which the vessels are arranged upright and, by virtue of adapted spacer means, allow to obtain the row mentioned above.

The obtainable pitch varies according to the specifications of the machine and to the nature of the spacer means chosen.

For example, it is possible to space the vessels by using screw feeders, toothed supporting belts, narrow conveyance belts, U-shaped elements and others.

As an alternative, the pitch can be defined by the dimensions of the vessels themselves, since they are arranged in a row one against the other, or by means of adapted handling devices.

Typically, bottling machines of a known type, since they have to ensure a preset hourly production, comprise bottling assemblies constituted by a battery of filling nozzles such as to allow the processing of multiple vessels at the same time.

In greater detail, such filling nozzles are mutually aligned along and above a portion of the advancement line with a pitch that coincides with the pitch of the underlying vessels, and when the group of vessels to be filled arrives they fill them simultaneously.

Thus, as the required productivity increases one proceeds to increase the number of nozzles in the individual battery and/or, depending on the maximum allowable space occupation of the machine, to multiply the individual lines.

Both of the outlined solutions, i.e., the longitudinal extension of the individual line and the arrangement of multiple lines in parallel, have the inevitable drawback that consists in multiplying the components needed and therefore the costs.

As an alternative, one might opt for bottling machines of the rotary type, which might contain the space occupation of the machine but would lead to an extremely rigid system in terms of format change, making it almost inapplicable, all at a higher cost than bottling machines of the linear type.

In addition US 2017/341919 A1 discloses a machine according to the preamble of claim 1.

The aim of the present invention is to provide a bottling machine that allows to have an increased productivity with respect to machines of a known type with limited space occupation.

Within this aim, an object of the present invention is to provide a bottling machine in which it is possible to perform a change of format simply and rapidly.

Another object of the present invention is to provide a bottling machine that allows easy and straightforward interventions by the operator.

Another object of the present invention is to provide a bottling machine that has production costs comparable with machines of a known type.

Another object of the present invention is to provide a bottling machine that offers the greatest assurances of reliability and efficiency.

This aim and these and other objects that will become better apparent hereinafter are achieved by a machine according to claim 1, particularly of the type with increased productivity, comprising at least one advancement assembly which operates along an advancement line and at least one processing station crossed by said advancement line and comprising at least one bottling assembly; characterized in that said at least one bottling assembly comprises at least two lateral batteries of filling nozzles arranged respectively above at least two advancement channels of vessels to be processed, which are organized in two mutually parallel rows and with said filling nozzles mutually spaced so as to be arranged at the vertical projection of said vessels to be processed.

Further characteristics and advantages of the invention will become better apparent from the description of a preferred but not exclusive embodiment of a machine, particularly of the type with increased productivity, according to the invention, illustrated by way of non-limiting example in the accompanying drawings, wherein:
Figure 1 is a schematic perspective view of the machine according to the present invention;
Figure 2 is a schematic top plan view of the machine shown in Figure 1;
Figure 3 is a schematic lateral elevation view of the machine shown in the preceding figures;
Figure 4 is a perspective view of a detail of the machine shown in the preceding figures;
Figure 5 is a schematic view of the advancement assembly of the machine shown in the preceding figures;
Figures 6 to 13 are eight schematic top plan views of an equal number of possible variations of the advancement assembly shown in the figure.

With reference to the above figures, the machine, particularly of the type with increased productivity, which in the present embodiment is of the bottling machine type, is generally designated by the reference numeral 1 and comprises at least one advancement assembly 2 which operates along an advancement line 3 and at least one processing station 4 crossed by the advancement line 3.

The advancement assembly 2 comprises a number "n" of screw feeders 5 comprised between 1 and "m" arranged on a working surface 6 and able to rotate about their respective longitudinal axis 7 which is arranged substantially parallel to the working surface 6 and to the advancement line 3.

In greater detail, each screw feeder 5 is extended from a station for picking up vessels to be processed 8, not shown for the sake of graphic convenience and since it is per se known, which is located upstream of said screw feeder 5 at least up to the processing station 4.

In order to allow the alignment of the vessels to be processed 8 according to parallel rows, as will be better apparent hereinafter, guiding strips 9 of the type that is transversely adjustable with respect to the longitudinal axis 7 are further comprised and are extended parallel to the advancement line 3 and substantially at right angles to the working surface 6 oppositely with respect to the screw feeders 5 for the definition of a plurality of external advancement channels 10 of the vessels to be processed 8 which are delimited by each guiding strip 9 and by the adjacent screw feeder 5 so that the vessels to be processed 8 can be trapped upright on the working surface 6 between two consecutive crests of the screw feeder 5 and the adjacent guiding strip 9.

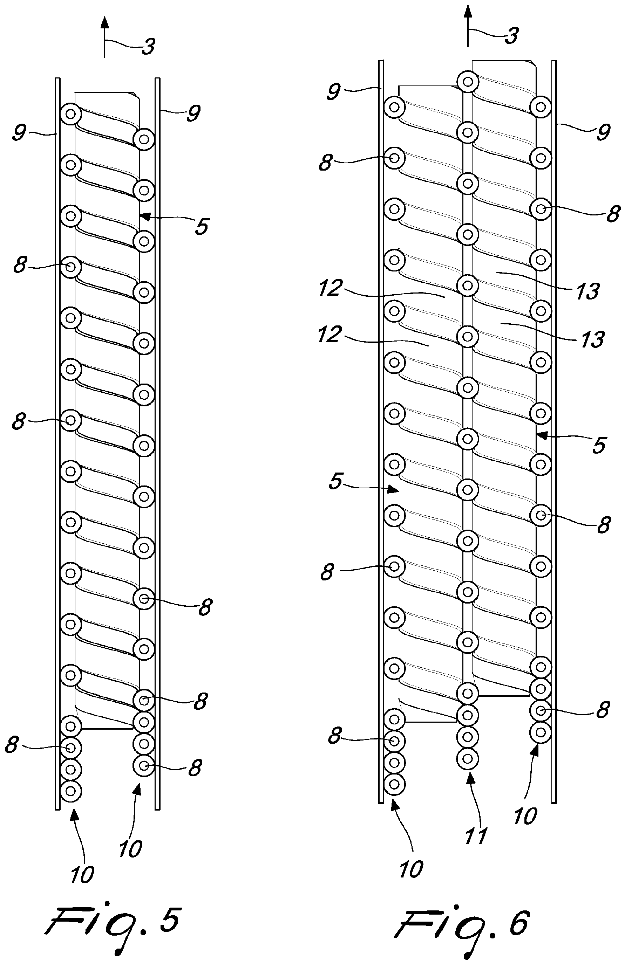

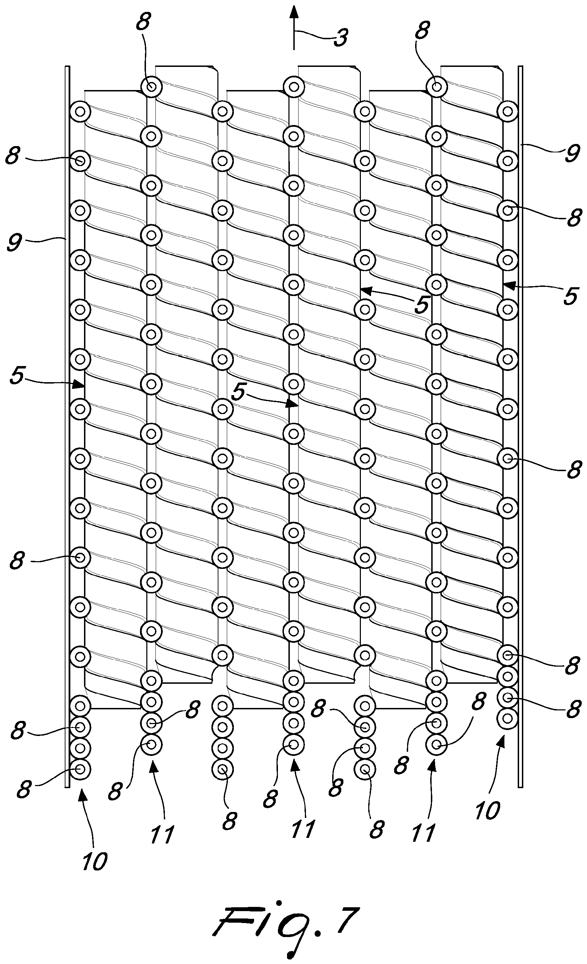

Advantageously, in possible variations of the advancement assembly 2 shown in Figures 6 and 7, this can comprise a plurality of screw feeders 5 which are mutually laterally adjacent in order to define a plurality of internal advancement channels 11 of the vessels to be processed 8 which are delimited by each pair of screw feeders 5 so that the vessels to be processed 8 can be trapped upright on the working surface 6 between two first consecutive crests 12 of a first screw feeder 5 and two second consecutive crests 13, which are opposite with respect to the first consecutive crests 12, of a second screw feeder 5 which is adjacent to the first screw feeder 5.

Conveniently, in this case the screw feeders 5 have the same pitch and are mutually synchronous in rotation.

In this manner, the vessels to be processed 8 can advance along said advancement line 3, upright on the working surface 6, following the rotation of the one or more screw feeders 5 about their respective longitudinal axis 7.

Conveniently, in order to assist the advancement of the vessels to be processed 8, the working surface 6 previously mentioned is constituted by a conveyor belt 14 which can move in a synchronous manner with the advancement speed of the vessels to be processed 8.

In the present embodiment, said conveyor belt 14 is provided by a plurality of side-by-side and mutually synchronous conveyor belts.

As shown in Figures 6 and 7, depending on the productivity required it is possible to provide an indefinite numbers of screw feeders 5 arranged so as to be able to manage a number of vessels to be processed 1 greater by one than the number of screw feeders.

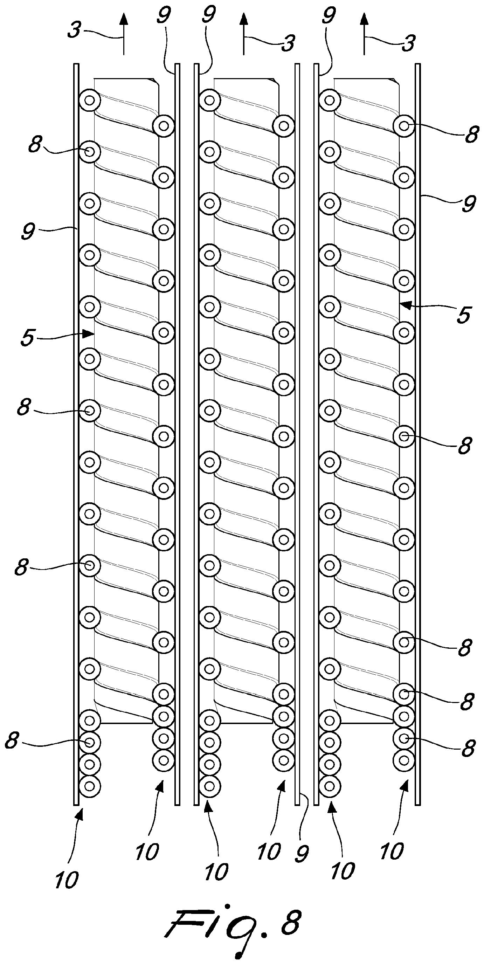

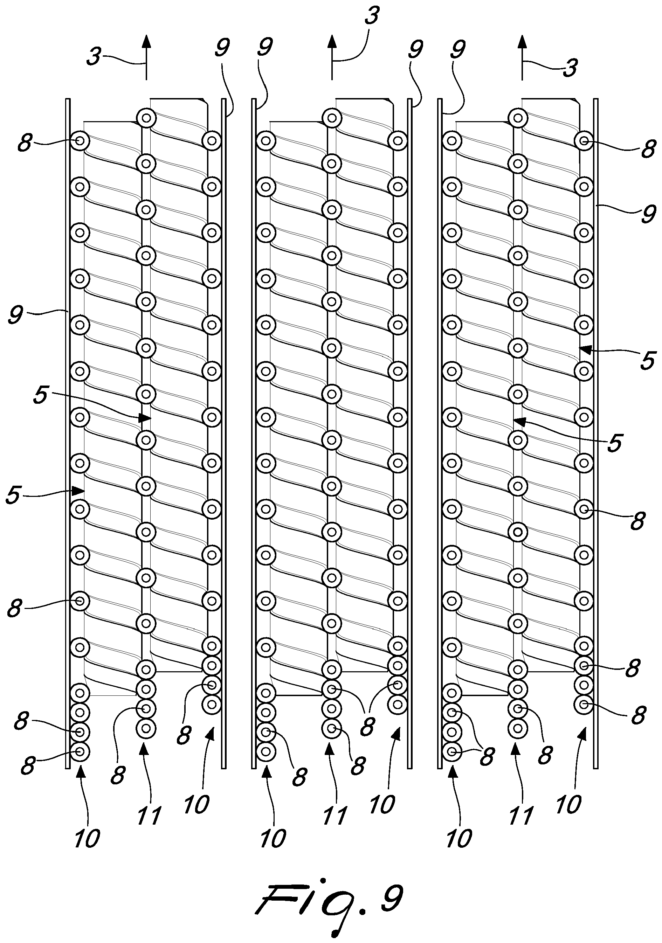

In addition, if this is not sufficient, with particular reference to Figures 8 and 9, it is possible to provide a plurality of advancement assemblies 2, such as those described previously, which operate along a plurality of advancement lines 3 which pass through the processing station.

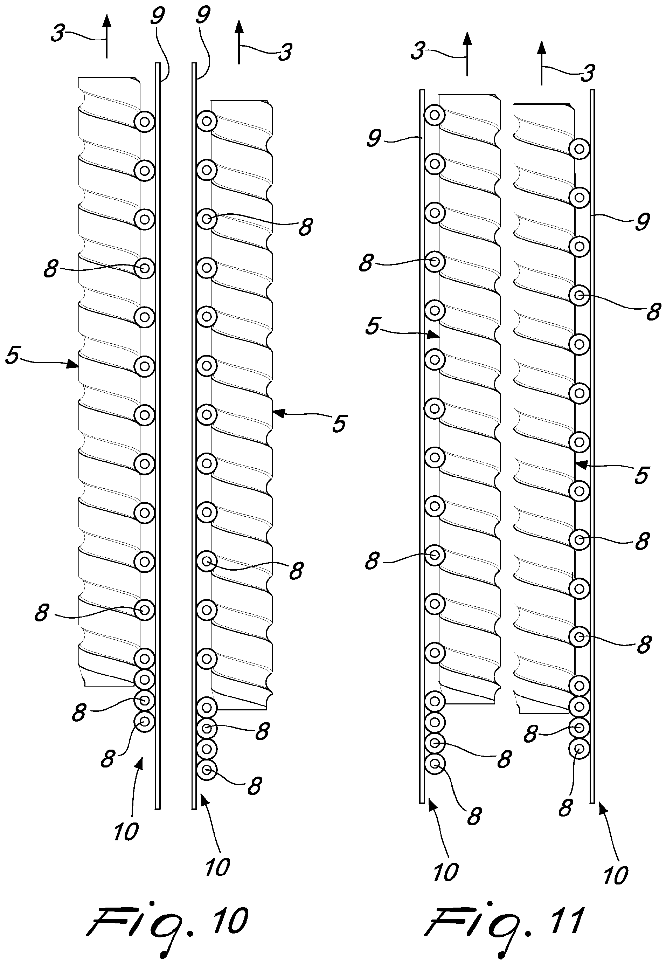

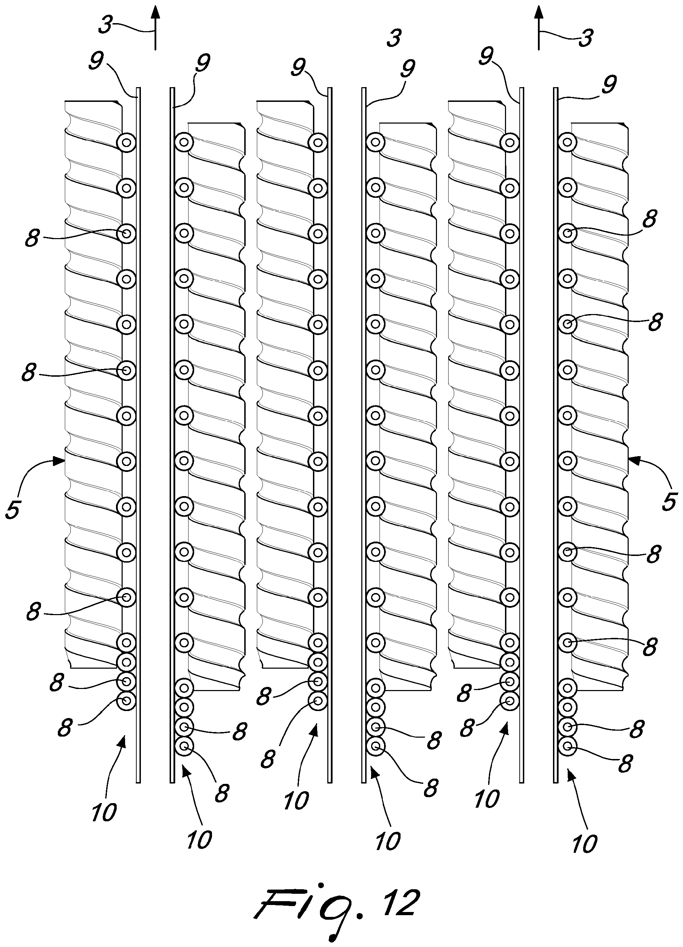

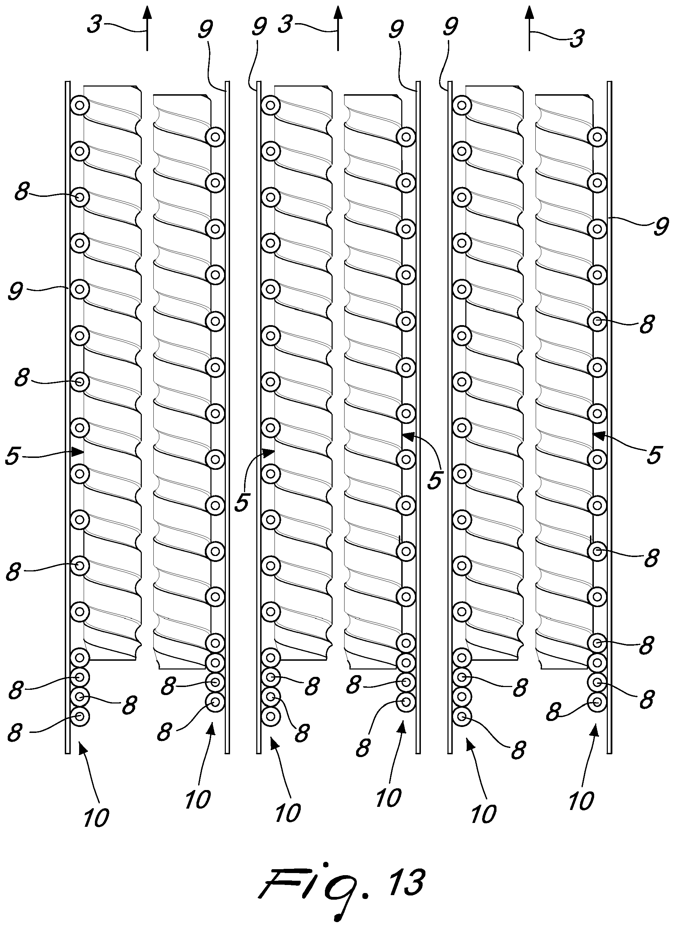

However, with particular reference to Figures 10 to 13, it is possible to provide traditional advancement assemblies 2, i.e., with a one-to-one ratio between the number of screw feeders 5 and the rows of vessels to be processed 8 arranged mutually side by side with said rows which can be positioned externally or internally to the screw feeders 5. These traditional advancement assemblies 2, having to manage the vessels to be processed 8 in an independent manner among the individual rows, can be mutually asynchronous and with different pitches depending on the diameter of the vessels to be processed 8 in the individual rows.

As already mentioned earlier, in the proposed embodiment the machine 1 is of the bottling machine type and the vessels to be processed 8 are bottles for beverages such as beer and the like.

However, nothing excludes that what has been described so far and what will be described hereinafter can be applied for the bottling and/or management of vessels which consist of: cans, jars, vials or containers in general for food products or non-food products such as: wine, oil, cider, liqueurs, spirits in general, creams, sauces, products for cosmetic use, products for pharmaceutical use, personal hygiene products and others.

According to the invention, the processing station thus comprises at least one bottling assembly 15 comprising in turn, for each pair of advancement channels 10 and/or 11, at least two lateral batteries 16 of filling nozzles 17 arranged respectively above the two advancement channels 10 and/or 11 with the filling nozzles 17 mutually spaced so as to be arranged at the vertical projection of the vessels to be processed 8.

The bottling assembly 15 is functionally connected to the two lateral batteries 16 and comprises a product tank 18 which feeds the filling nozzles 17 by means of adapted manifolds and electric valves.

Arranged downstream of the filling nozzles 17 along the advancement line 3, the bottling assembly 15 comprises closure fitting devices 19 arranged respectively above the advancement channels 10 and/or 11 so as to be located at the vertical projection of the vessels to be processed 8 once they have been filled.

The bottling assembly 15 is functionally connected to the closure fitting devices 19 and comprises a closure feeder 20.

Since as a result of bottling the product might froth, the bottling assembly 15 comprises at least two frothing nozzles 21 arranged between the two lateral batteries 16 and the closure fitting devices 19 along the advancement line 3.

These nozzles, which are functionally connected to a water tank 22, are arranged respectively above the advancement channels 10 and/or 11 so as to be located at the vertical projection of the vessels to be processed 8 once they have been filled.

Advantageously, there is a single supporting beam 23 which is arranged above and centrally with respect to the advancement channels 10 and/or 11 and which supports laterally at least one from the filling nozzles 17, the frothing nozzles 21 and the closure fitting devices 19 and centrally at least one from the product tank 18, the water tank 22 and the closure feeder 20.

The filling nozzles 17 of each lateral battery 16 are longitudinally offset, along the advancement line 3, with respect to the filling nozzles of the other opposite lateral battery 16 so that the actuation and supply components of each filling nozzle 17 of each lateral battery 16 are accommodated at least partly between two filling nozzles 17 which belong to the other opposite lateral battery 16.

Likewise, the closure fitting devices 19 and the frothing nozzles 21 also can be offset with respect to their opposites.

In order to meet the different timings of the bottling, frothing and closure fitting steps, each screw feeder 5 can be divided into two portions with an independent speed, the first of which is extended up to the bottling assembly 15 included and the second is extended below the frothing nozzles 21 and the closure fitting devices 19.

Finally, to complete the machine 1, it is possible to provide washing and rinsing devices, which are per se known and therefore are not shown graphically, and are adapted to clean and rinse the vessels 8 during the filling and closure fitting process, or it is possible to provide any other device adapted to perform operations which are additional and/or alternative to those described so far, which are in any case comprised within the inventive concept of the present invention.

Conveniently, depending on the productivity required, the processing station can comprise a plurality of bottling assemblies 15 such as the one described above, arranged above an equal number of advancement lines 3.

The operation of the machine 1 according to the invention is clear and understandable from what has been described so far.

In particular, it should be highlighted that depending on the required productivity and the maximum acceptable space occupation for the machine 1, the machine can be designed by implementing a plurality of mutually parallel advancement lines 3 with an equal number of advancement assemblies 2 and bottling assemblies 3.

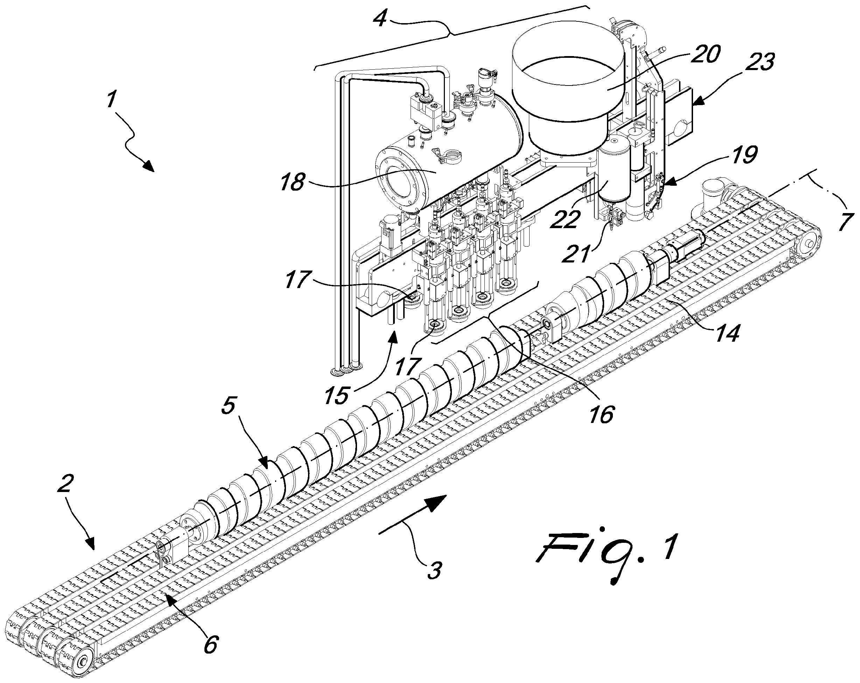

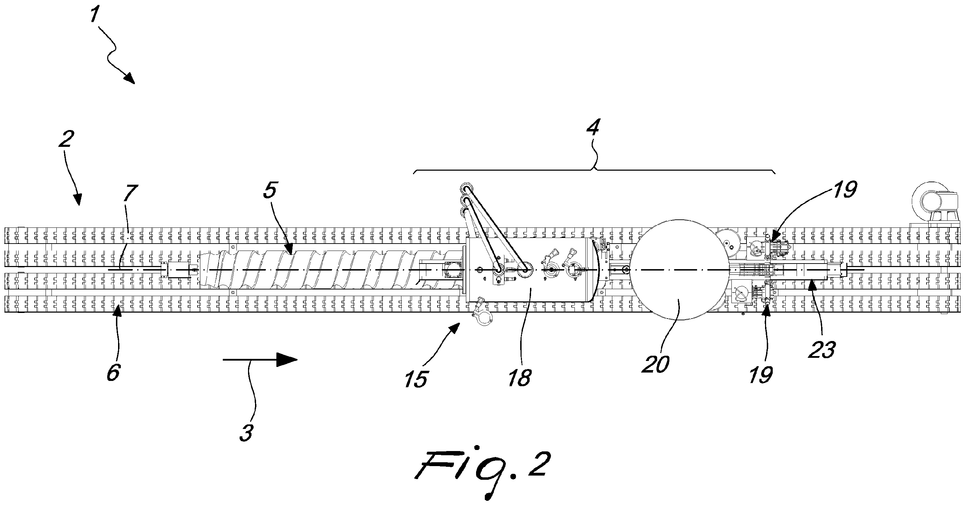

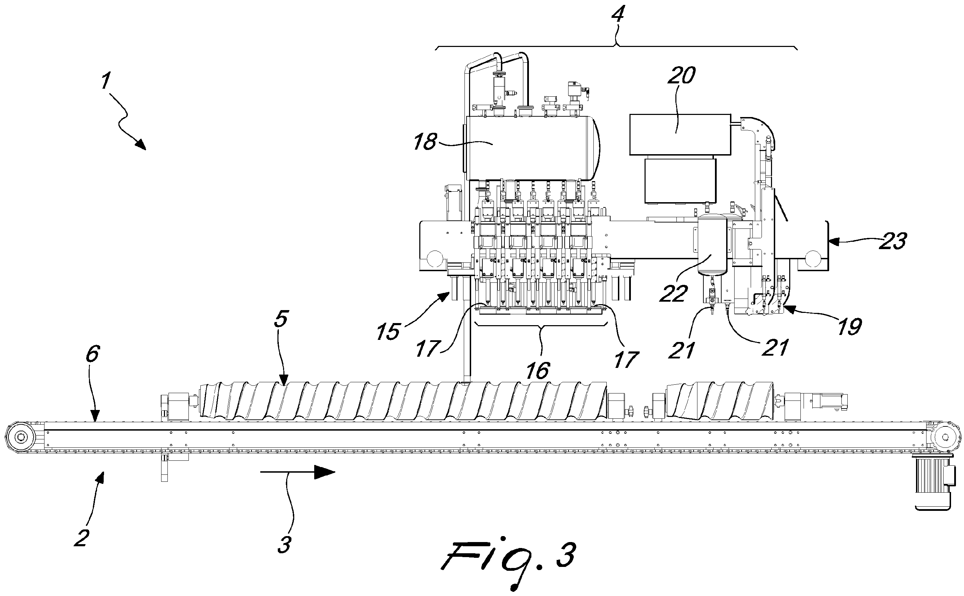

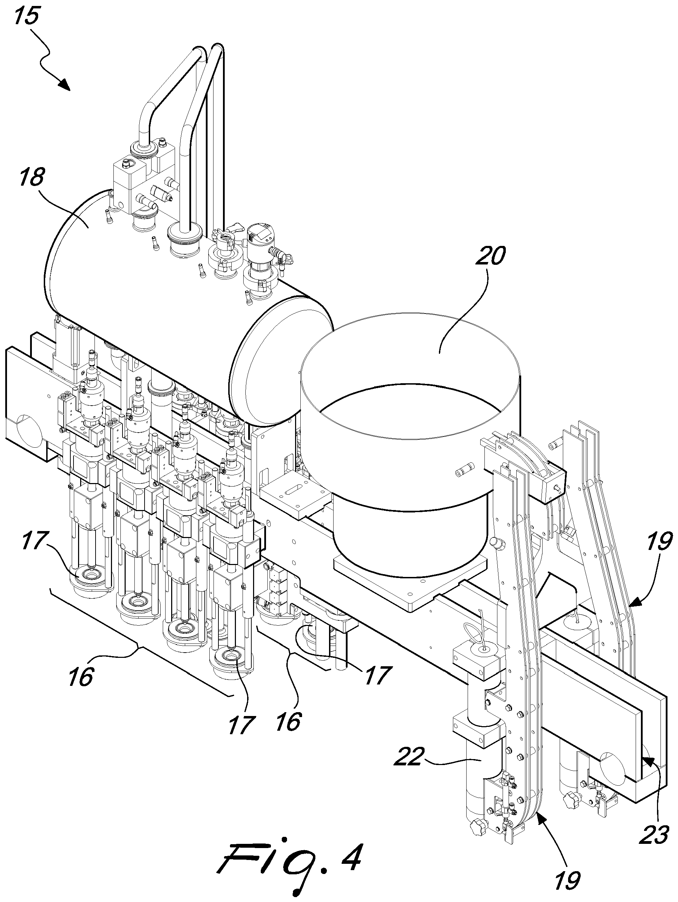

As shown in the cited Figures 1 to 9, as regards the advancement assemblies 2, they can comprise screw feeders 5 which, by virtue of guiding strips 9 or other screw feeders 5, define feeding channels 10 and/or 11 on both sides of the individual screw feeder 5 so as to double the transport capacity of the individual screw feeder 5 and, regardless of the constructive nature of the individual feeding assembly 2, the bottling assembly 15 allows to perform all the bottling steps by optimizing its lateral space occupations due to fewer components because they are common among different mutually offset lateral batteries 16 of filling nozzles 17.

In practice it has been found that the machine, particularly of the type with increased productivity, fully achieves the intended aim and objects, since it allows to multiply the lines and thus to increase productivity without necessary doubling at the same time the components of the machine both as regards the advancement assembly and as regards the bottling assembly.

This is possible by virtue of the doubling of the advancement lines by utilizing the individual screw feeders from both sides and/or the bottling assembly with single beam.

In this manner, furthermore, it is possible to contain the longitudinal space occupation at the expense of a slight increase in the transverse one.

Furthermore, by virtue of the adjustable guiding strips, it is possible, by changing just the screw feeder, to perform a change of format that is immediate and at low cost.

Another advantage of the machine according to the present invention resides in that the bottling assembly thus defined allows access by the operator from both sides without any space occupation of any kind. In fact, on the individual sides of the bottling assembly there is free access to the bottling nozzles of the relevant side and to the electrohydraulic components of the opposite side.

The machine, particularly of the type with increased productivity, thus conceived is susceptible of numerous modifications provided that they fall within the scope of the accompanying claims.

In practice, the materials used, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine (1) comprising at least one advancement assembly (2) which operates along an advancement line (3) and at least one processing station (4) crossed by said advancement line (3) and comprising at least one bottling assembly (15); said at least one bottling assembly (15) comprising at least two lateral batteries (16) of filling nozzles (17) arranged respectively above at least two advancement channels (10, 11) of vessels to be processed (8), which are organized in two mutually parallel rows and with said filling nozzles (17) mutually spaced so as to be arranged at the vertical projection of said vessels to be processed (8), wherein said filling nozzles (17) of each one of said at least two lateral batteries (16) are longitudinally offset, along said advancement line (3), with respect to said filling nozzles of the other one of said at least two lateral batteries (16) **characterized in that** the actuation and supply components of each one of said filling nozzles (17) of each one of said at least two lateral batteries (16) is accommodated at least partly between two of said filling nozzles (17) which belong to the other one of said at least two lateral batteries (16).

2. The machine (1) according to claim 1, **characterized in that** it is of the bottling machine type and **in that** said vessels to be processed (8) are bottles.

3. The machine (1) according to claim 1 or 2, **characterized in that** said at least two lateral batteries (16) are functionally connected to a product tank (18).

4. The machine (1) according to one or more of the preceding claims, **characterized in that** said bottling assembly (15) comprises closure fitting devices (19) located downstream of said filling nozzles (17) along said advancement line (3) and arranged respectively above said advancement channels (10, 11) so as to be located at the vertical projection of said vessels to be processed (8) once they have been filled.

5. The machine (1) according to one or more of the preceding claims, **characterized in that** said closure fitting devices (19) are functionally connected to a closure feeder (20).

6. The machine (1) according to one or more of the preceding claims, **characterized in that** said bottling assembly (15) comprises at least two frothing nozzles (21) which are arranged between said at least two lateral batteries (16) and said closure fitting devices (19) along said advancement line (3) and arranged respectively above said advancement channels (10, 11) so as to be located at the vertical projection of said vessels to be processed (8) once they have been filled.

7. The machine (1) according to one or more of the preceding claims, **characterized in that** said frothing nozzles (21) are functionally connected to a water tank (22).

8. The machine (1) according to one or more of the preceding claims, **characterized in that** it comprises a single supporting beam (23) which is arranged above and centrally with respect to said advancement channels (10, 11) and supports laterally at least one from said filling nozzles (17), said frothing nozzles (21) and said closure fitting devices (19) and centrally at least one from said product tank (18), said water tank (22) and said closure feeder (20).

9. The machine (1) according to one or more of the preceding claims, **characterized in that** said processing station (4) comprises a plurality of said bottling assemblies (15).

10. The machine (1) according to one or more of the preceding claims, **characterized in that** said at least one advancement assembly (2) comprises a number n of screw feeders (5) comprised between 1 and m arranged on a working surface (6) and able to rotate about their respective longitudinal axis (7) which is arranged substantially parallel to said working surface (6) and to said advancement line (3); each one of said screw feeders (5) extending from a station for picking up vessels to be processed (8) which is located upstream of said screw feeder (5) at least up to said processing station (4); guiding strips (9) being further comprised which extend parallel to said advancement line (3) and substantially at right angles to said working surface (6) oppositely with respect to said screw feeders (5) for the definition of a plurality of external advancement channels (10) of said vessels to be processed (8) which are delimited by each one of said guiding strips (9) and by the adjacent one of said screw feeders (5) so that said vessels to be processed (8) can be trapped upright on said working surface (6) between two consecutive crests (12, 13) of said screw feeder (5) and the adjacent one of said guiding strips (9) and can advance along said advancement line (3) following the rotation of said screw feeders (5) about said respective longitudinal axis (7).

11. The machine (1) according to claim 9, **characterized in that** said advancement assembly (2) comprises a plurality of said screw feeders (5) which are mutually laterally adjacent in order to define a plurality of internal advancement channels (11) of said vessels to be processed (8) which are delimited by each pair of said screw feeders (5) so that said vessels to be processed (8) can be trapped upright on said working surface (6) between two first consecutive crests (12) of a first one of said screw feeders (5) and two second consecutive crests (13) which are opposite with respect to said first consecutive crests (12), of a second one of said screw feeders (5) which is adjacent to said first screw feeder (5), said screw feeders (5) having the same pitch and being mutually synchronous in rotation.

12. The machine (1) according to claims 9 or 10, **characterized in that** said working surface (6) is constituted by a conveyor belt (14) which can move synchronously with the advancement speed of said vessels to be processed (8).

13. The machine (1) according to one or more of claims 9 to 11, **characterized in that** it comprises a plurality of said advancement assemblies (2) which operate along a plurality of advancement lines (3) which pass through said at least one processing station (4).

## Patentansprüche

1. Eine Anlage (1), die mindestens einen Vorschubaufbau (2) umfasst, welcher entlang einer Vorschublinie (3) arbeitet, und mindestens eine Behandlungsstation (4), die von der Vorschublinie (3) durchquert wird und mindestens eine Füllvorrichtung (15) umfasst, wobei die mindestens eine Füllvorrichtung (15) mindestens zwei seitliche Sätze (16) von Füllstutzen (17) umfasst, jeweils angeordnet über mindestens zwei Vorschubkanälen (10, 11) zu behandelnder Gefäße (8), welche in zwei zueinander parallelen Reihen geordnet sind und wobei die Füllstutzen (17) voneinander beabstandet sind, um an der vertikalen Projektion der zu behandelnden Gefäße (8) angeordnet zu werden; wobei die Füllstutzen (17) jedes der mindestens zwei seitlichen Sätze (16) entlang der Vorschublinie (3) im Verhältnis zu den Füllstutzen des anderen der mindestens zwei seitlichen Sätze (16) in Längsrichtung versetzt sind; **dadurch gekennzeichnet, dass** die Betätigungs- und Versorgungskomponenten jedes der Füllstutzen (17) jedes der mindestens zwei seitlichen Sätze (16) zumindest teilweise zwischen zwei der Füllstutzen (17) angeordnet sind, die zu dem anderen der mindestens zwei seitlichen Sätze (16) gehören.

2. Die Anlage (1) gemäß Anspruch 1, **dadurch gekennzeichnet, dass** sie vom Abfüllanlagentyp ist, und dadurch, dass die zu behandelnden Gefäße (8) Flaschen sind.

3. Die Anlage (1) gemäß Anspruch 1 oder 2, **dadurch gekennzeichnet, dass** die mindestens zwei seitlichen Sätze (16) funktionell mit einem Produktbehälter (18) verbunden sind.

4. Die Anlage (1) gemäß einem oder mehreren der obigen Ansprüche, **dadurch gekennzeichnet, dass** die Füllvorrichtung (15) Verschlussaufsetzvorrichtungen (19) umfasst, die sich entlang der Vorschublinie (3) stromabwärts von den Füllstutzen (17) befinden und jeweils über den Vorschubkanälen (10, 11) angeordnet sind, um an der vertikalen Projektion der zu behandelnden Gefäße (8) positioniert zu werden, sobald sie gefüllt wurden.

5. Die Anlage (1) gemäß einem oder mehreren der obigen Ansprüche, **dadurch gekennzeichnet, dass** die Verschlussaufsetzvorrichtungen (19) funktionell mit einer Verschlusszuführvorrichtung (20) verbunden sind.

6. Die Anlage (1) gemäß einem oder mehreren der obigen Ansprüche, **dadurch gekennzeichnet, dass** die Füllvorrichtung (15) mindestens zwei Schäumdüsen (21) umfasst, die zwischen den mindestens zwei seitlichen Sätzen (16) und den Verschlussaufsetzvorrichtungen (19) entlang der Vorschublinie (3) und oberhalb der Vorschubkanäle (10, 11) angeordnet sind, um an der vertikalen Projektion der zu behandelnden Gefäße (8) positioniert zu sein, sobald sie gefüllt wurden.

7. Die Anlage (1) gemäß einem oder mehreren der obigen Ansprüche, **dadurch gekennzeichnet, dass** die Schäumdüsen (21) funktionell mit einem Wasserbehälter (22) verbunden sind.

8. Die Anlage (1) gemäß einem oder mehreren der obigen Ansprüche, **dadurch gekennzeichnet, dass** sie einen einzigen Träger (23) umfasst, der oberhalb von und zentral mit Bezug auf die Vorschubkanäle (10, 11) angeordnet ist und seitlich mindestens eines der Füllstutzen (17), der Schäumdüsen (21) und der Verschlussaufsetzvorrichtungen (19) und in der Mitte mindestens eines von dem Produktbehälter (18), dem Wasserbehälter (22) und der Verschlusszuführvorrichtung (20) trägt.

9. Die Anlage (1) gemäß einem oder mehreren der obigen Ansprüche, **dadurch gekennzeichnet, dass** die Behandlungsstation (4) eine Vielzahl der Füllvorrichtungen (15) umfasst.

10. Die Maschine (1) gemäß einem oder mehreren der obigen Ansprüche, **dadurch gekennzeichnet, dass** der mindestens eine Vorschubaufbau (2) eine Anzahl n von Schneckenförderern (5) umfasst, die zwischen 1 und m beträgt, angeordnet auf einer Arbeitsfläche (6) und in der Lage, sich um ihre entsprechende Längsachse (7) zu drehen, welche im Wesentlichen parallel zu der Arbeitsfläche (6) und zu der Vorschublinie (3) angeordnet ist; wobei jeder der Schneckenförderer (5) sich von einer Station zum Aufnehmen zu behandelnder Gefäße (8), die sich stromaufwärts von dem Schneckenförderer (5) befindet, mindestens bis zu der Behandlungsstation (4) erstreckt; wobei weiter Führungsleisten (9) umfasst sind, die sich parallel zu der Vorschublinie (3) und im Wesentlichen in rechten Winkeln zu der Arbeitsfläche (6) den Schneckenförderern (5) gegenüber erstrecken, zur Bestimmung einer Vielzahl externer Vorschubkanäle (10) der zu behandelnden Gefäße (8), die durch jede der Führungsleisten (9) und durch den benachbarten Schneckenförderer (5) begrenzt sind, so dass die zu behandelnden Gefäße (8) aufrecht auf der Arbeitsfläche (6) zwischen zwei aufeinander folgenden Scheitelpunkten (12, 13) des Schneckenförderers (5) und der angrenzenden Führungsleiste (9) eingefangen werden und sich infolge der Drehung der Schneckenförderer (5) um die entsprechende Längsachse (7) entlang der Vorschublinie (3) vorwärts bewegen können.

11. Die Anlage (1) gemäß Anspruch 9, **dadurch gekennzeichnet, dass** der Vorschubaufbau (2) eine Vielzahl der Schneckenförderer (5) umfasst, die seitlich aneinander angrenzen, um eine Vielzahl interner Vorschubkanäle (11) der zu behandelnden Gefäße (8) zu bestimmen, die durch jedes Paar der Schneckenförderer (5) begrenzt sind, so dass die zu behandelnden Gefäße (8) aufrecht auf der Arbeitsfläche (6) zwischen zwei ersten aufeinander folgenden Scheitelpunkten (12) eines ersten der Schneckenförderer (5) und zwei zweiten aufeinander folgenden Scheitelpunkten (13) eines zweiten Schneckenförderers (5), welcher an den ersten Schneckenförderer (5) angrenzt, eingefangen werden können, die den ersten aufeinander folgenden Scheitelpunkten (12) gegenüberliegen; wobei die Schneckenförderer (5) dieselbe Steigung haben und in der Drehung miteinander synchron sind.

12. Die Anlage (1) gemäß Anspruch 9 oder 10, **dadurch gekennzeichnet, dass** die Arbeitsfläche (6) aus einem Förderband (14) besteht, welches sich synchron mit der Vorschubgeschwindigkeit der zu behandelnden Gefäße (8) bewegen kann.

13. Die Anlage (1) gemäß einem oder mehreren der Ansprüche 9 bis 11, **dadurch gekennzeichnet, dass** sie eine Vielzahl der Vorschubaufbauten (2) umfasst, die entlang einer Vielzahl von Vorschublinien (3) arbeiten, welche durch die mindestens eine Behandlungsstation (4) verlaufen.

## Revendications

1. Machine (1) comprenant au moins un ensemble d'avancement (2) qui fonctionne le long d'une ligne d'avancement (3) et au moins un poste de traitement (4) traversé par ladite ligne d'avancement (3) et comprenant au moins un ensemble d'embouteillage (15) ; ledit au moins un ensemble d'embouteillage (15) comprenant au moins deux batteries latérales (16) de buses de remplissage (17) agencées respectivement au-dessus d'au moins deux canaux d'avancement (10, 11) de récipients à traiter (8), qui sont organisés dans deux rangées mutuellement parallèles et avec lesdites buses de remplissage (17) mutuellement espacées de sorte à être agencées au niveau de la projection verticale desdits récipients à traiter (8), dans laquelle lesdites buses de remplissage (17) de chacune desdites au moins deux batteries latérales (16) sont longitudinalement décalées, le long de ladite ligne d'avancement (3), par rapport auxdites buses de remplissage de l'autre desdites au moins deux batteries latérales (16), **caractérisée en ce que** les composants d'actionnement et d'alimentation de chacune desdites buses de remplissage (17) de chacune desdites au moins deux batteries latérales (16) sont logés au moins partiellement entre deux desdites buses de remplissage (17) qui appartiennent à l'autre desdites au moins deux batteries latérales (16).

2. Machine (1) selon la revendication 1, **caractérisée en ce qu'**elle est du type machine d'embouteillage et **en ce que** lesdits récipients à traiter (8) sont des bouteilles.

3. Machine (1) selon la revendication 1 ou 2, **caractérisée en ce que** lesdites au moins deux batteries latérales (16) sont fonctionnellement reliées à un réservoir de produit (18).

4. Machine (1) selon l'une ou plusieurs des revendications précédentes, **caractérisée en ce que** ledit ensemble d'embouteillage (15) comprend des dispositifs de fixation de fermeture (19) situés en aval desdites buses de remplissage (17) le long de ladite ligne d'avancement (3) et agencés respectivement au-dessus desdits canaux d'avancement (10, 11) de sorte à être situés au niveau de la projection verticale desdits récipients à traiter (8) une fois qu'ils ont été remplis.

5. Machine (1) selon l'une ou plusieurs des revendications précédentes, **caractérisée en ce que** lesdits dispositifs de fixation de fermeture (19) sont fonctionnellement reliés à un chargeur de fermeture (20).

6. Machine (1) selon l'une ou plusieurs des revendications précédentes, **caractérisée en ce que** ledit ensemble d'embouteillage (15) comprend au moins deux buses de moussage (21) qui sont agencées entre lesdites au moins deux batteries latérales (16) et lesdits dispositifs de fixation de fermeture (19) le long de ladite ligne d'avancement (3) et agencées respectivement au-dessus desdits canaux d'avancement (10, 11) de sorte à être situées au niveau de la projection verticale desdits récipients à traiter (8) une fois qu'ils ont été remplis.

7. Machine (1) selon l'une ou plusieurs des revendications précédentes, **caractérisée en ce que** lesdites buses de moussage (21) sont fonctionnellement reliées à un réservoir d'eau (22).

8. Machine (1) selon l'une ou plusieurs des revendications précédentes, **caractérisée en ce qu'**elle comprend une seule poutre de support (23) qui est agencée au-dessus et centralement par rapport aux dits canaux d'avancement (10, 11) et supporte latéralement au moins un desdites buses de remplissage (17), desdites buses de moussage (21) et desdits dispositifs de fixation de fermeture (19) et centralement au moins un dudit réservoir de produit (18), dudit réservoir d'eau (22) et dudit chargeur de fermeture (20).

9. Machine (1) selon l'une ou plusieurs des revendications précédentes, **caractérisée en ce que** ledit poste de traitement (4) comprend une pluralité desdits ensembles d'embouteillage (15).

10. Machine (1) selon l'une ou plusieurs des revendications précédentes, **caractérisée en ce que** ledit au moins un ensemble d'avancement (2) comprend un nombre n de chargeurs de vis (5) compris entre 1 et m agencés sur une surface de travail (6) et aptes à tourner autour de leur axe longitudinal (7) respectif qui est agencé sensiblement parallèlement à ladite surface de travail (6) et à ladite ligne d'avancement (3) ; chacun desdits chargeurs de vis (5) s'étendant depuis un poste de prise en charge des récipients à traiter (8) qui est situé en amont dudit chargeur de vis (5) au moins jusqu'au poste de traitement (4) ; des bandes de guidage (9) étant en outre comprises, lesquelles s'étendent parallèlement à ladite ligne d'avancement (3) et sensiblement à angles droits à ladite surface de travail (6) à l'opposé par rapport auxdits chargeurs de vis (5) pour la définition d'une pluralité de canaux d'avancement externes (10) desdits récipients à traiter (8) qui sont délimités par chacune desdites bandes de guidage (9) et par le chargeur adjacent desdits chargeurs de vis (5) de sorte que lesdits récipients à traiter (8) puissent être attrapés debout sur ladite surface de travail (6) entre deux crêtes consécutives (12, 13) dudit chargeur de vis (5) et la bande adjacente desdites bandes de guidage (9) et puissent avancer le long de ladite ligne d'avancement (3) suivant la rotation desdits chargeurs de vis (5) autour dudit axe longitudinal (7) respectif.

11. Machine (1) selon la revendication 9, **caractérisée en ce que** ledit ensemble d'avancement (2) comprend une pluralité de dits chargeurs de vis (5) qui sont adjacents mutuellement latéralement afin de définir une pluralité de canaux d'avancement internes (11) desdits récipients à traiter (8) qui sont délimités par chaque paire desdits chargeurs de vis (5) de sorte que lesdits récipients à traiter (8) puissent être attrapés debout sur ladite surface de travail (6) entre deux premières crêtes consécutives (12) d'un premier desdits chargeurs de vis (5) et deux deuxièmes crêtes consécutives (13) qui sont opposées par rapport auxdites premières crêtes consécutives (12) d'un deuxième chargeur desdits chargeurs de vis (5) qui est adjacent audit premier chargeur de vis (5), lesdits chargeurs de vis (5) ayant le même pas et étant mutuellement synchrones en rotation.

12. Machine (1) selon la revendication 9 ou 10, **caractérisée en ce que** ladite surface de travail (6) est constituée par une bande de transport (14) qui peut se déplacer de manière synchrone avec la vitesse d'avancement desdits récipients à traiter (8).

13. Machine (1) selon l'une ou plusieurs des revendications 9 à 11, **caractérisée en ce qu'**elle comprend une pluralité desdits ensembles d'avancement (2) qui fonctionnent le long d'une pluralité de lignes d'avancement (3) qui passent à travers ledit au moins un poste de traitement (4).
